# EUROPEAN PATENT APPLICATION

(11) **EP 1 662 211 A1**
(43) Date of publication of application: **31.05.2006**
(21) Application number: 04027841.8
(22) Date of filing: 24.11.2004
(51) Int. Cl.: F24F 12/00, F24F 11/00

(54) **An arrangement for ventilating a suspended foundation of a building**

(71) Applicant: Östberg, Hans, 770 70 Langshyttan (SE)
(72) Inventor: Östberg, Hans, 770 70 Langshyttan (SE)
(74) Representative: Olsson, Jan

(57) **Abstract**

An arrangement for ventilating a suspended foundation (2) of a building comprises a first conduit (8) extending from a space (3) under the lower floor structure (4) of the building to the exterior of the building and means adapted to suck air from said space through this conduit and deliver it to the exterior. A second conduit (10) extends from said space to the exterior of the building and means are adapted to suck air from the exterior of the building through this conduit and deliver this air to said space (3). The air flows in both said conduits are led through separate rooms of a rotary heat exchanger (14) for heat transfer from the warmer of the two air flows to the colder one.

## Description

### TECHNICAL FIELD OF THE INVENTION AND PRIOR ART

The present invention relates to an arrangement for ventilating a suspended foundation of a building, i.e. a foundation of the type having a space between the lower floor structure of the building and the ground surface under the building and openings above the ground in vertical walls of said foundation for ventilating said space.

The invention is applicable to all types of buildings having a said suspended foundation, one family houses as well as larger buildings, such as with flats and industrial buildings. In common for these types of buildings is that without an appropriate ventilation of said space under the lower floor structure of a building the degree of moisture will be high with an inherent risk of problems with mould resulting in damage of the building structure. Depending upon the nature of the ground upon which the building is located the content of radon, which may propagate through the lower floor structure, may result in an exposure of persons in the building to radon to a non-acceptable extension.

It is possible to get rid of the moisture problem by installing a dehumidifier in said space, but this will then not solve the problem with the radon. An arrangement of the type defined in the introduction for ventilating the suspended foundation is therefore required for taking care of the moisture problem as well as the problem with radon. However, the ventilation obtained through such an arrangement results, at least during the colder part of the year, in an increased transport of heat through said lower floor structure of the building into said space and thereby a considerable loss of energy for heating the building and thereby heating costs being remarkably higher than without such a ventilation. During the summer the comparatively cold air in said space will through said ventilation be removed from that space and thereby the temperature of the air inside the space will be increased. This is negative, since the problems with moisture and mould are most accentuated during the summer period, and these problems increase with an increased temperature.

### SUMMARY OF THE INVENTION

The object of the present invention is to provide an arrangement of the type defined in the introduction which is to at least some extent improved with respect to such arrangements already known.

This object is according to the invention obtained by providing said arrangement with a first conduit extending from said space to the exterior of the building, means adapted to suck air from said space through said conduit and deliver it to the exterior, a second conduit extending from said space to the exterior of the building, means adapted to suck air from the exterior of the building through said second conduit and deliver this air to said space of the foundation as well as a rotary heat exchanger, and by leading the air flows in both said conduits through separate rooms of said rotary heat exchanger for heat transfer from the warmer of the two air flows to the colder one.

This arrangement will take care of the removal of radon and lowering of the moisture degree in said space while reducing the heat losses considerably in the colder part of the year, since the air led into said space will then be heated through the warmer air drawn out of the space. This results in a reduced transport of heat through said lower floor structure and thereby a reduction of the cost for heating the building.

During the warmer period of the year, in which it is desired to keep the temperature of the air in said space as low as possible for reducing problems with moisture and mould, the air delivered to said space may hereby be cooled through the colder air drawn out of the space and thereby a desired low temperature be maintained in said space in spite of said ventilation.

By using a rotary heat exchanger for the heat exchange there will be no problems with ice formation during the winter as would have been the case when using for instance a plate heat exchanger. This means that it is not necessary to provide any automatic defrosting function as for a plate heat exchanger.

"Rotary heat exchanger" is here to be understood as any type of heat exchanger having a body rotating slowly and being alternatively exposed to the air flow in one of the two said separate rooms, i.e. to the air flow to be cooled and to the one to be heated. Such a rotary heat exchanger is sometimes also called a regenerative heat exchanger. The efficiency of the heat exchange of such a heat exchanger may be in the order of 80%.

According to a preferred embodiment of the invention said arrangement comprises means adapted to prevent that air delivered to the exterior through said first conduit is directly drawn into said second conduit. This means that it is prevented that air possibly containing a high concentration of radon and a high degree of moisture is drawn into the space of the suspended foundation again.

According to another preferred embodiment of the invention the arrangement comprises means adapted to prevent that air delivered through said second conduit to said space is drawn directly into said first conduit. This promotes ventilation of said space of the suspended foundation and removal of "older" air possibly containing a high concentration of radon and a higher degree of moisture than the air delivered to said space through said second conduit. A simple way to realize efficient such prevention means is to arrange the inlet and outlet ends of said conduits outside the building and in said space of the suspended foundation, respectively, at a substantial distance to each other.

According to another preferred embodiment of the invention the air flows in said conduits are led in substantially opposite directions through said rotary heat exchanger, which provides a high degree of freedom when deciding the place for arranging said heat exchanger, since the air flows in the different conduits are in opposite directions in the sense that one is from the exterior into said space and the other from said space to the exterior.

According to other preferred embodiments of the invention, said rotary heat exchanger is adapted to be arranged below said lower floor structure inside said space, above said lower floor structure inside said building and outdoors outside said building. It is appropriate to arrange a layer for thermal insulation around the heat exchanger when this is arranged inside a building for avoiding problems with condensation on the outer walls thereof.

According to another preferred embodiment of the invention the arrangement comprises a casing enclosing said two means for sucking air through said conduits as well as said rotary heat exchanger. It is preferred to arrange all parts of the arrangement except said conduits in one single unit in such a casing, especially for protecting the different parts by said casing.

Said means for sucking air in the respective conduit may be any type of fans, preferably radial fans.

Other advantages as well as advantageous features of the invention will appear from the following description and the other dependent claims.

### BRIEF DESCRIPTION OF THE DRAWINGS

With reference to the appended drawings, below follows a specific description of preferred embodiments of the invention cited as examples.

### In the drawings:

Fig 1 is a schematic view illustrating how an arrangement according to an embodiment of the invention is arranged for ventilating a suspended foundation of a building,
Fig 2 is a schematic view of the arrangement according to Fig 1 from above,
Fig 3 is a schematic perspective view of a casing including parts of an arrangement according to the invention, in which parts of the walls are broken away,
Fig 4 is a schematic view of the casing according to Fig 3 from above with a lid forming the top of the casing removed,
Fig 5 is a view corresponding to Fig 1 of an arrangement according to another embodiment of the invention, and
Fig 6 is a view corresponding to Fig 1 of a still further embodiment of the invention.

### DETAILED DESCRIPTION OF PREFERRED EMBODIMENTS OF THE INVENTION

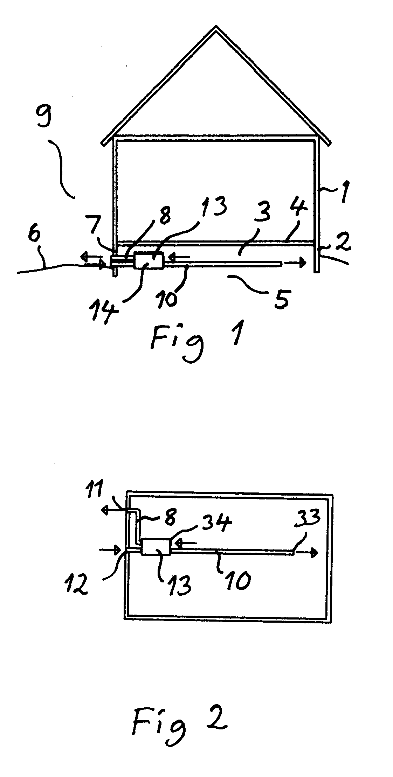

Fig 1 schematically shows a building 1 having a suspended foundation 2, i.e. a foundation of the type having a space 3 between the lower floor structure 4 of the building and the ground surface 5 under the building as well as openings (to be further discussed below) above the ground 6 in vertical walls 7 of said foundation for ventilating said space 3.

An arrangement according to the invention for ventilating this suspended foundation 2 is illustrated in this Figure and comprises a first conduit 8 extending from said space 3 to the exterior 9 of the building and means adapted to suck air from said space through said conduit and deliver it to the exterior. The arrangement also comprises a second conduit 10 extending from said space to the exterior of the building and means adapted to suck air from the exterior of the building through said second conduit and deliver this air to said space 3 of the foundation.

It is shown in Figs 1 and 2 how the outlet end 11 of the first conduit 8 and the inlet end 12 of the second conduit 10 are arranged at a substantial distance to each other for preventing that air delivered to the exterior through said first conduit is drawn directly into said second conduit. It also appears from these Figures that the outlet end 33 of the second conduit 10 is arranged at a considerable distance to the inlet end 34 of the first conduit 8 for preventing air delivered through said second conduit to said space from being drawn directly into the first conduit.

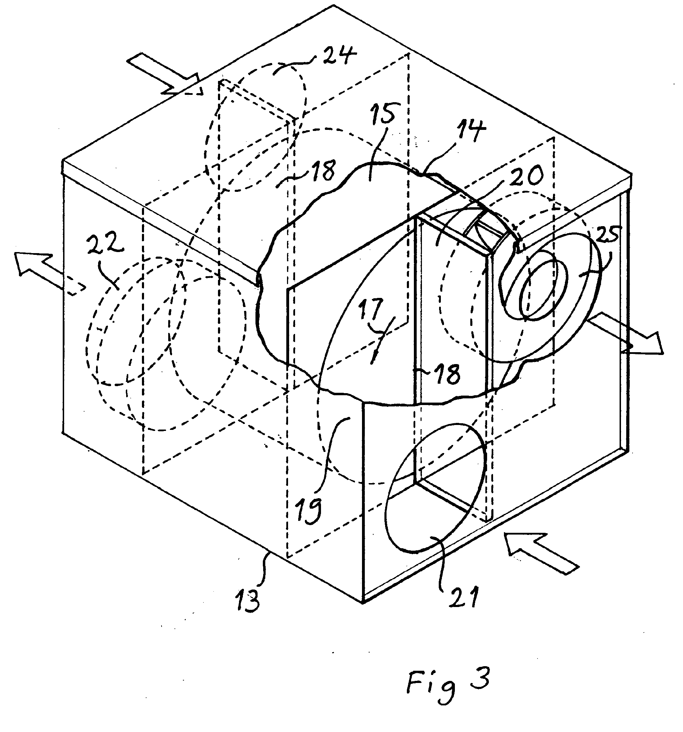

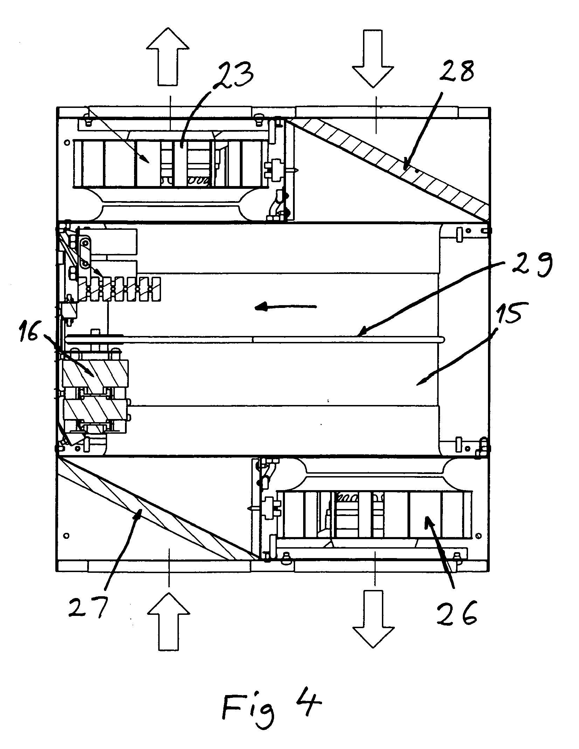

Reference is now also made to Figs 3 and 4. The two conduits 8, 10 are led through a casing 13 containing a rotary heat exchanger 14. This also comprises the case that each conduit has a part on both sides of the casing and is interrupted through said casing as well as the case in which a conduit starts on one side of the casing as is the case for the conduit 8 in Fig 1.

The rotary heat exchanger is a so-called regenerative heat exchanger having a regenerator 15 or body made of or containing filling material with a high capacity to absorb and emit heat energy. This body 15 is driven by a motor 16 to rotate slowly according to the arrow 17. Partition walls 18 separate the casing and seals with respect to each end surface of the body 15, so that half of the body is arranged in one room 19 and the other half in another room 20 thus formed. The conduit 8 is connected to openings 21, 22 on opposite sides of the casing 13, and a fan 23 is arranged close to the opening 22 for drawing air from a said space 3 through the opening 21 through the half of the body 15 in the room 19 and out through the opening 22 to be delivered to the exterior of the building.

Correspondingly, the conduit 10 is connected to openings 24, 25 on opposite sides of the casing, and a fan 26 is arranged close to the opening 25 for drawing air from the exterior of the building through the conduit 10 into the casing and through the half of the body 15 in the room 20 out through the opening 25 and into the space 3. It also appears from Fig 4 that filters 27, 28 are arranged near the inlet openings 21 and 24, respectively, of the casing. A rim 29 for rotating the body 15 is also shown.

When air is drawn through the body 15 it will exchange heat energy with the material of this body, so that it will be heated when the temperature of the body is higher than the air temperature and cooled when the relationship is the opposite. This means in the practice that during cold months, when the temperature outdoors is lower than the temperature in said space, the air drawn through the conduit 8 will be cooled when passing the body 15 while delivering heat energy thereto. When the part of the body in the room 19 is rotating and becomes the part in the room 20 being located in the flow of the second conduit 10 it will come into contact with colder air drawn from the exterior of the building and deliver heat energy to this air flow delivered to said space 3. When the temperature relationship between the space 3 and the exterior 9 of the building is the opposite, i.e. it is warmer outdoors than in said space 3, as normally in the summer months, heat energy will in this way instead be transferred from the air drawn from the exterior in the conduit 10 to the air drawn from the space 3, so that the air delivered to said space 3 will have a lower temperature than otherwise.

Although not shown in the Figures different types of sensors, such as for sensing temperature, degree of humidity, radon content and the like may be arranged for controlling the fans to ventilate a said suspended foundation in dependence of such parameters, but it is also well possible that these fans are continuously running with the same speed irrespectively of such parameters. It is also possible to let the fans run at certain intervals, which may be adjustable or not, irrespectively of such parameters. However, such parameters may also be used for saving energy by letting the fans only run when it is judged to be a need thereof.

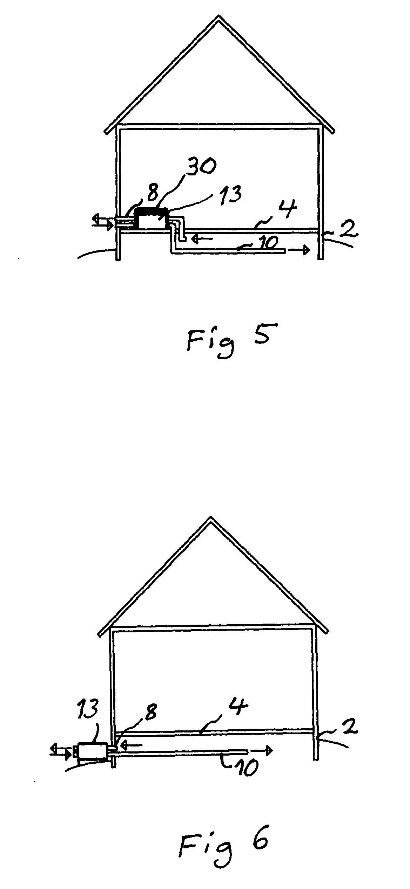

The casing 13 is in the embodiment shown in Fig 1 arranged in said space 3. However, it is possible to arrange this casing on other locations, and it is shown in Fig 5 how it may be arranged inside a warm room above the lower floor structure 4 of a building. A layer 30 for thermal insulation is arranged around the casing for avoiding problems with condensation on the outer walls of the casing, which may be much colder than the air inside the building. Fig 6 shows that it may also be arranged outdoors, since there is no risk of ice formation in a said rotary heat exchanger.

The invention is of course not in any way restricted to the preferred embodiments thereof described above, but many possibilities to modifications thereof will be apparent to a person with ordinary skill in the art without departing from the basic idea of the invention as defined in the appended claims.

The different inlet and outlet ends of the conduits of the arrangement may be located in other positions and the conduits have other lengths than shown in the Figures.

It is theoretically also possible to let the two air flows have the same direction trough the rotary heat exchanger, although it is mostly most convenient to have these led in substantially opposite directions through the rotary heat exchanger.

A plurality of arrangements according to the invention may be adapted to be arranged for ventilating a suspended foundation of one building.

More than one first and second conduits may be led to the same rotary heat exchanger and they may be united into one or not before reaching the heat exchanger.

## Claims

1. An arrangement for ventilating a suspended foundation (2) of a building, i.e. a foundation of the type having a space (3) between the lower floor structure (4) of the building and the ground surface under the building and openings above the ground in vertical walls of said foundation for ventilating said space, **characterized in that** said arrangement comprises a first conduit (8) extending from said space to the exterior of the building, means (23) adapted to suck air from said space through said conduit and deliver it to the exterior, a second conduit (10) extending from said space to the exterior of the building, means (26) adapted to suck air from the exterior of the building through said second conduit and deliver this air to said space (3) of the foundation as well as a rotary heat exchanger, and that the air flows in both said conduits are led through separate rooms of said rotary heat exchanger (14) for heat transfer from the warmer of the two air flows to the colder one.

2. An arrangement according to claim 1, **characterized in that** it comprises means adapted to prevent that air delivered to the exterior through said first conduit (8) is directly drawn into said second conduit (10).

3. An arrangement according to claim 2, **characterized in that** said means for preventing that air delivered to the exterior through said first conduit (8) is drawn directly into said second conduit (10) is formed by arranging the outlet end of the first conduit at a substantially distance, at least one metre and preferably at least two metres, to the inlet end of said second conduit.

4. An arrangement according to any of the preceding claims, **characterized in that** it comprises means adapted to prevent that air delivered through said second conduit (10) to said space (3) is drawn directly into said first conduit (8).

5. An arrangement according to claim 4, **characterized in that** said means for preventing air delivered through said second conduit (10) to said space from being drawn directly into said first conduit (8) is formed by arranging the outlet of the second conduit at a considerable distance, at least one metre and preferably at least two metres, in said space to the inlet of said first conduit.

6. An arrangement according to any of the preceding claims, **characterized in that** the air flows in said conduits (8, 10) are led in substantially opposite directions through said rotary heat exchanger.

7. An arrangement according to any of the preceding claims, **characterized in that** said rotary heat exchanger (14) is adapted to be arranged below said lower floor structure (4) inside said space (3).

8. An arrangement according to any of claims 1-6, **characterized in that** said rotary heat exchanger (14) is adapted to be arranged above said lower floor structure (4) inside said building.

9. An arrangement according to claim 8, **characterized in that** a layer (30) for thermal insulation is arranged around the rotary heat exchanger (14).

10. An arrangement according to any of claims 1-6, **characterized in that** said rotary heat exchanger (14) is adapted to be arranged outdoors outside a said building.

11. An arrangement according to any of the preceding claims, **characterized in that** it comprises a casing (13) enclosing said two means (23, 26) for sucking air through said conduits as well as said rotary heat exchanger (14).

12. An arrangement according to any of the preceding claims, **characterized in that** said means for sucking air in the respective conduit are radial fans (23, 26).
